# EUROPEAN PATENT APPLICATION

(11) **EP 3 907 113 A1**
(43) Date of publication of application: **10.11.2021**
(21) Application number: 21172867.0
(22) Date of filing: 07.05.2021
(51) Int. Cl.: B60W 10/02, B60W 10/06, B60W 10/08, B60W 20/20, B60K 1/02, B60K 6/387, B60K 6/442, B60K 6/547, B60K 6/48

(54) **A PROPULSION APPARATUS FOR A VEHICLE AND A RELATED CONTOL METHOD**

(30) Priority: 07.05.2020 IT 202000010273
(71) Applicant: Altra S.p.A., 16138 Genova (IT)
(72) Inventor: SANTARONI, Leonardo, 16132 GENOVA (IT); MANTOVANI, Giorgio, 16148 GENOVA (IT); BERNARDINI, Alessandro, 16126 GENOVA (IT)
(74) Representative: Faraldi, Marco

(57) **Abstract**

A propulsion apparatus (PA) for a vehicle includes an internal combustion engine (ICE), a first and a second electric motor-generator (EM1, EM2), a transmission line (TM) coupled to the engine (ICE) to transmit power from the engine (ICE) to a user element (U) and provided with a first and a second member (S1, S2) that can be coupled to the engine (ICE) and to the first member (S1) by means of respective clutch elements (C1, C2), a first transmission (T1) for coupling the first motor-generator (EM1) to the first member (S1) by means of a third clutch element (C3), a second transmission (T2) for coupling the second motor-generator (EM2) to the second member (S2) by means of a fourth clutch element (C4), and electrical energy storage means (BY).

## Description

### CROSS-REFERENCE TO RELATED APPLICATIONS

This patent application claims priority from Italian patent application no. 102020000010273 filed on 7/05/2020.

### TECHNICAL FIELD

The present invention relates to a propulsion apparatus for a vehicle, in particular a heavy hybrid vehicle, as well as to a control method for controlling said apparatus.

### STATE OF THE KNOWN ART

In the field of vehicle propulsion, the development of hybrid propulsion systems provided with two or more engines that operate in synergy in order to increase propulsion efficiency is known.

In particular, hybrid propulsion systems usually include at least one electric motor-generator on account of the high efficiency and of the capacity to store electrical energy during the braking of the vehicle.

In general, the need is felt to manufacture hybrid propulsion systems that are controllable so as to obtain a greater propulsion efficiency with respect to the current state of the art, preferably as a function of the road to be travelled and/or the requests of the driver.

Moreover, the need is also felt to provide control methods that allow managing hybrid propulsion systems more efficiently with respect to what is known in the art, preferably as a function of the road to be travelled and/or the requests of the driver.

The object of the invention is to satisfy the needs set out above.

### SUMMARY OF THE INVENTION

Such object is achieved by a propulsion apparatus and control methods as claimed in the appended claims.

The dependent claims define particular embodiments of the invention.

### BRIEF DESCRIPTION OF THE DRAWINGS

For a better understanding of the present invention, a preferred embodiment is described in the following, by way of a non-limiting example and with reference to the accompanying drawings, wherein:
- Figure 1 is a diagram of a propulsion apparatus according to the invention;
- Figure 2 illustrates a range of plausible speeds for a vehicle operated by the apparatus of Figure 1;
- Figure 3 depicts an efficiency map of an electric motor-generator of the apparatus of Figure 1;
- Figure 4 is a block diagram that illustrates steps of a control method according to the invention;
- Figure 5 is a block diagram that illustrates further steps of the method of Figure 3; and
- Figures 6 and 7 are graphs that depict respective selection maps useful for the execution of the method of Figure 3.

### DETAILED DESCRIPTION OF THE INVENTION

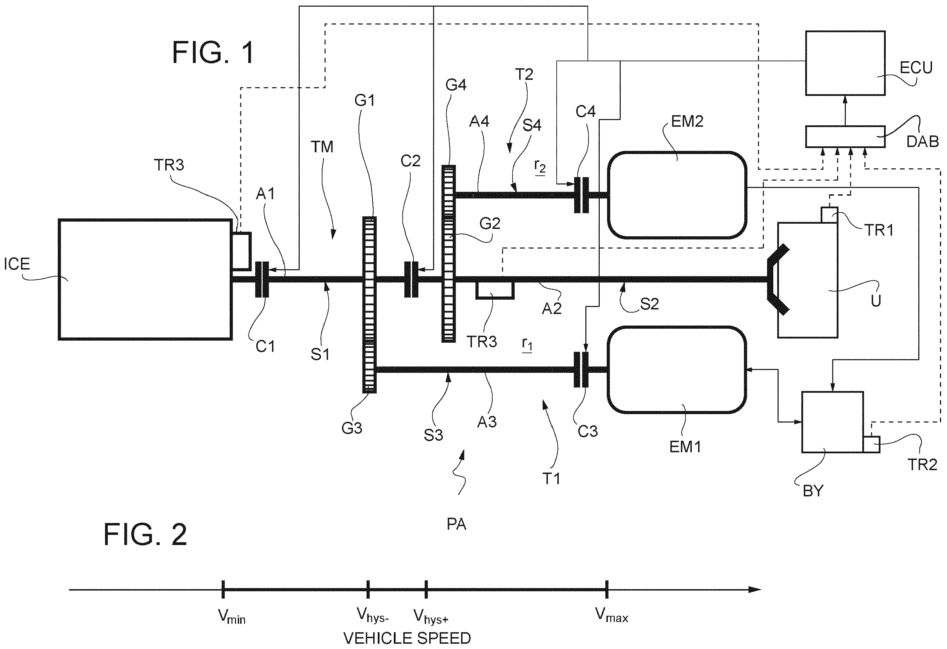

In Figure 1, the reference symbol PA indicates a propulsion apparatus.

The apparatus PA comprises an internal combustion engine ICE and two electric motor-generators EM1, EM2. Preferably, the motor-generators EM1, EM2 share the same power band and same efficiencies with respect to equal operating conditions.

Moreover, the apparatus PA comprises a transmission line TM that can be coupled to the engine ICE so as to transmit the output power from the latter to a user U of a known vehicle, for example an automotive differential.

The user U is adapted to transmit the received power to at least one pair of wheels (not illustrated) of the vehicle, so that the vehicle can be driven along a trajectory.

In Figure 1, the transmission line TM is coupled to the engine ICE, conveniently in a releasable manner.

More specifically, the transmission line TM comprises a plurality of transmission members that can be coupled in a serial manner to one another and to the user U so as to transmit the power of the engine ICE to the user U.

In other words, the transmission members define a series of members for the transmission of power from the engine ICE to the user U in a serial manner.

Specifically, the series has, in succession, a clutch element C1 coupled to the engine ICE, a member S1 that can be selectively coupled to the engine ICE by means of the clutch element C1, a clutch element C2 coupled to the member S1 and a member S2 that can be selectively coupled to the member S1 by means of the clutch element C2. The member S2 is coupled to the user U in a releasable manner.

The clutch element C1 is controllable for selectively coupling or separating the engine ECU and the member S1. Similarly, the clutch element C2 is controllable for selectively coupling or separating the members S1, S2.

Therefore, the clutch element C1 has an engaged configuration, wherein the engine ECU and the member S1 are coupled to one another, and a disengaged configuration, wherein the engine ECU and the member S1 are separated from one another.

Similarly, the clutch element C2 has an engaged configuration, wherein the members S1, S2 are coupled to one another, and a disengaged configuration, wherein the members S1, S2 are separated from one another.

More specifically, the clutch elements C1 and C2 are friction clutches; in particular, the members S1, S2 comprise shafts A1, A2 which engage with an output shaft of the engine ICE and with one another by means of the clutch elements C1 and C2, respectively.

Moreover, the members S1, S2 comprise respective transmission elements G1, G2 which allow the corresponding coupling of the motor-generators EM1, EM2 to the transmission line TM, so that the user U can receive additional or replacement power from the motor-generators EM1, EM2.

For example, the transmission elements G1 and G2 are gears fitted on the shafts A1, A2.

In order to couple the motor-generator EM1 to the member S1, in particular by way of the transmission element G1, the apparatus PA comprises a transmission T1 which in turn includes a clutch element C3 for selectively coupling or separating the motor-generator EM1 and the member S1.

In order to couple the motor-generator EM2 to the member S2, in particular by way of the transmission element G2, the apparatus PA comprises a transmission T2 which in turn includes a clutch element C4 for selectively coupling or separating the motor-generator EM2 and the member S2.

Therefore, also the clutch elements C3, C4 have respective engaged configurations, wherein the motor-generators EM1, EM2 are coupled to the transmission line TM, and respective disengaged configurations, wherein the motor-generators EM1, EM2 are separated from the transmission line TM.

In particular, also the clutch elements C3, C4 are friction clutches.

In the embodiment of Figure 1, the transmission T1 comprises a member S3 that can be coupled to the motor-generator EM1 by means of the clutch element C3. The member S3 comprises, in particular, a shaft A3 that engages with an output shaft of the motor-generator EM1 by means of the clutch element C3. Moreover, the member S3 comprises a transmission element G3, specifically a gear fitted on the shaft A3, coupled to the transmission element G1.

The transmission T2 comprises a member S4 that can be coupled to the motor-generator EM2 by means of the clutch element C4. The member S4 comprises, in particular, a shaft A4 that engages with an output shaft of the motor-generator EM2 by means of the clutch element C4. Moreover, the member S4 comprises a transmission element G4, specifically a gear fitted on the shaft A4, coupled to the transmission element G2.

When the clutch elements C3, C4 couple the motor-generators EM1, EM2 to the respective members S1, S2, the transmissions T1, T2 define two corresponding transmission ratios r1, r2, which are in particular distinct from one another and constant.

The choice or setting of the ratios r1, r2 forms part of a manufacturing process for manufacturing the apparatus PA in order for the latter to be as efficient as possible during use.

In practice, the ratios r1, r2 are chosen so that the vehicle travels at speeds belonging to two distinct intervals when it is driven by the motor-generator EM1 only and by the motor-generator EM2 only, respectively, wherein the intervals are contiguous or overlap one another to a small extent, so that their union defines a complete spectrum of the possible speeds of the vehicle during a common mission.

The intersection between the intervals defines a hysteresis interval, whose minimum dimension is zero (contiguous intervals) and whose maximum dimension is 15 km/h.

Figure 2 shows possible speed intervals of the vehicle when it is driven by the motor-generator EM1 only and by the motor-generator EM2 only, respectively, wherein the hysteresis interval is included; the symbols Vₘᵢₙ and Vₘₐₓ respectively indicate the minimum and maximum speeds of the vehicle, while the symbols V_{hys+} and V_{hys-} indicate the upper and lower extremes of the hysteresis interval.

Of the two intervals, one defines a low speed interval and the other defines a high speed interval.

Moreover, the ratios r1, r2 are selected so that the intervals correspond to respective output speed intervals of the motor-generators EM1, EM2, which are respective maximum efficiency intervals for the motor-generators EM1, EM2.

A maximum efficiency interval is understood to be an interval outside of which the average efficiency of a motor-generator, with respect to all allowable output torque values, is lower than an efficiency threshold. In other words, for an output speed value outside of the maximum efficiency interval, the arithmetic mean of the efficiencies relating to the possible output torque values is lower than the efficiency threshold.

The efficiency threshold is equal to or greater than 0.85.

This way, both motor-generators EM1, EM2 can operate in their maximum efficiency intervals, covering the entire spectrum of the speeds normally assumed by the vehicle in use.

In such sense, the spectrum of the speeds is evaluated on the basis of statistics relating to the missions normally carried out by the vehicles, considering the routes travelled in urban areas, suburban areas, uphill, downhill, on freeways, etc.

The evaluation of the maximum efficiency intervals is performed based on efficiency maps that associate a pair of values of the output speed and of the output torque with an efficiency. In this case, the efficiency maps relating to the motor-generators EM1, EM2 are identical. Therefore, in the following, reference will be made only to one of the two motor-generators EM1, EM2, it being understood that the described principles also apply to the other. Obviously, in the case of motor-generators EM1, EM2 with different efficiency maps, the same general principles still remain valid although the values of the efficiencies, of the output speeds and of the output torques are different.

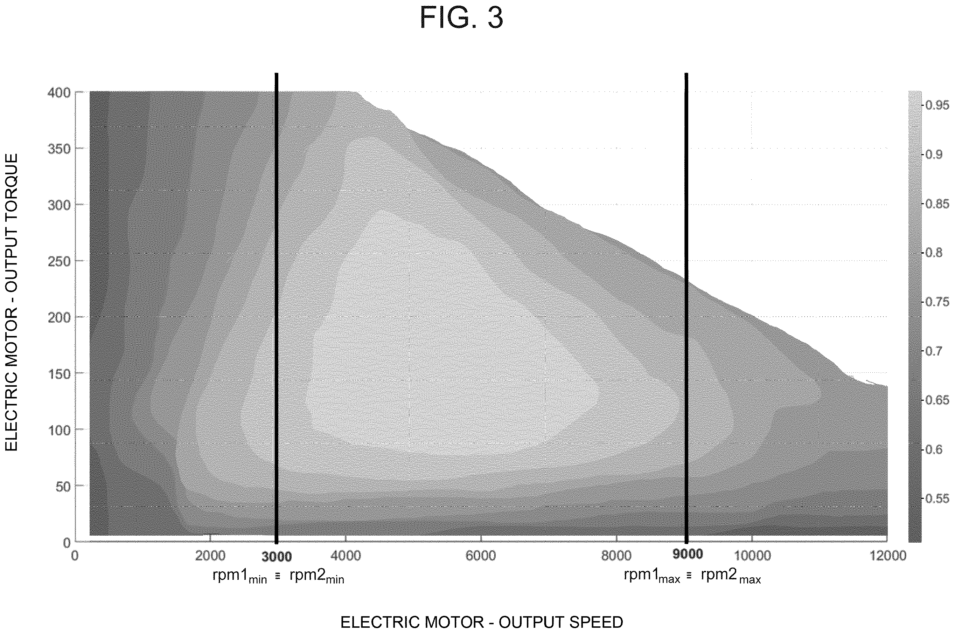

Figure 3 illustrates an example of an efficiency map of the motor-generator EM1. The values of the efficiencies are depicted in greyscale, while the two axes show the output speeds in horizontal and the output torques in vertical.

As is visible in Figure 3, the extremes of the maximum efficiency interval define a minimum output speed rpm1ₘᵢₙ and a maximum output speed rpm1ₘₐₓ for the motor-generator EM1. Analogously, the motor-generator EM2 has a maximum efficiency interval defined by a minimum output speed rpm2ₘᵢₙ and a maximum output speed rpm2ₘₐₓ, not illustrated.

For output speeds lower than rpm1ₘᵢₙ or rpm2ₘᵢₙ, the average efficiencies of the motor-generator EM1 or EM2, respectively, are lower than the efficiency threshold. The same occurs with output speeds greater than rpm1ₘₐₓ or rpm2ₘₐₓ.

To set the ratio r1, it is sufficient to determine one between rpm1ₘᵢₙ and rpm1ₘₐₓ.

With no loss of generality, considering the aforementioned low speed interval, the ratio r1 can be set so that the vehicle travels at the minimum speed Vₘᵢₙ when driven by the motor-generator EM1 turning at rpm1ₘᵢₙ, without the contribution of the motor-generator EM2. This means that the clutch element C3 couples the motor-generator EM1 to the member S1, while the clutch element C4 separates the motor-generator EM2 from the member S2.

Alternatively, the ratio r1 could be set so that the vehicle travels at the maximum speed of the low speed interval V_{hys+} (upper extreme of the hysteresis interval) when driven by the motor-generator EM1 turning at rpm1ₘₐₓ, without the contribution of the motor-generator EM2.

Analogously, to set the ratio r2, it is sufficient to determine one between rpm2ₘᵢₙ and rpm2ₘₐₓ.

Considering the aforementioned high speed interval, the ratio r2 can be set so that the vehicle travels at the maximum speed Vₘₐₓ when driven by the motor-generator EM2 turning at rpm2ₘₐₓ, without the contribution of the motor-generator EM1. This means that the clutch element C3 separates the motor-generator EM1 from the member S1, while the clutch element C4 couples the motor-generator EM2 to the member S2.

Alternatively, the ratio r2 could be set so that the vehicle travels at the minimum speed of the high speed interval V_{hys-} (lower extreme of the hysteresis interval) when driven by the motor-generator EM2 turning at rpm2ₘᵢₙ, without the contribution of the motor-generator EM1.

In the example described above, the motor-generators EM1, EM2 are respectively associated with the low and high speed intervals. However, also the opposite would be possible; in such case, rpm1ₘᵢₙ and rpm1ₘₐₓ would be associated with V_{hys}- and Vₘₐₓ by means of r1, while rpm2ₘᵢₙ and rpm2ₘₐₓ would be associated with Vₘᵢₙ and V_{hys+}.

With reference to Figure 1, the apparatus PA further comprises an electrical energy storage device BY, in particular a battery, which is electrically connected to the motor-generators EM1, EM2. The device BY has the function of storing the energy generated by the motor-generators EM1, EM2 and supplying the stored energy to said motor-generators EM1, EM2.

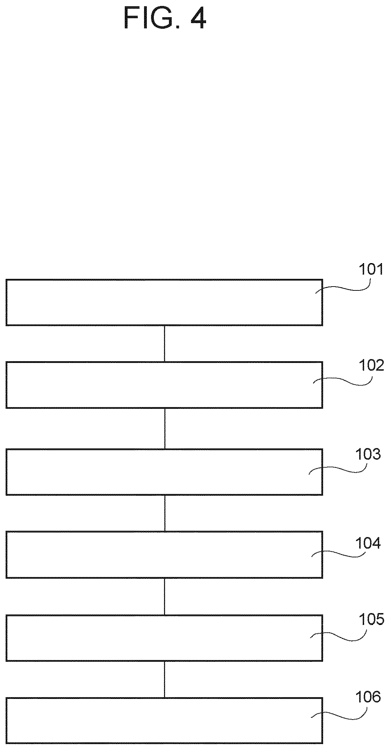

In addition, the apparatus PA also comprises an acquisition unit, for example including a data acquisition board DAB, for acquiring (step 101 of Figure 4) measurements of one or more quantities indicative of operating parameters of the apparatus PA or of the vehicle, for example parameters which represent the stored energy or the amount of residual charge in the device BY, or (kinematic/dynamic) motion parameters of the vehicle such as speed, acceleration, torque values of one or more components of the transmission line TM, torque values of the engine ICE, resistant torque, angular steering speed, and the like.

Specifically, the acquisition assembly comprises the board DAB and a pair of transducers or sensors TR1, TR2, of which the transducer TR1 detects a first quantity indicative of a parameter or state of motion of the vehicle and the transducer TR2 detects a second quantity indicative of the energy stored by the device BY.

In particular, the first quantity is indicative of the speed of the vehicle and the second quantity is indicative of the state of charge of the device BY; for example, the state of charge can be expressed by means of a charge percentage.

The transducers or sensors TR1, TR2 generate signals relating to the respective detected quantities and are connected to the board DAB, so that the latter receives the generated signals.

Moreover, the apparatus PA comprises a control unit ECU connected to the acquisition assembly for extracting (step 102 of Figure 4) information relating to the acquired measurements.

More precisely, the control unit ECU extracts first information associated with the first quantity and second information associated with the second quantity, in particular from the board DAB.

Based on the extracted information, the control unit ECU operates or controls each of the clutch elements C1, C2, C3, C4 individually during the running of the vehicle.

In this manner, by selecting the engaged or disengaged configuration for the clutch elements C1, C2, C3, C4, the control unit ECU selects or implements an operating configuration of the vehicle, i.e. a specific driving mode of the vehicle.

The selectable operating configurations or driving modes can be grouped according to different driving domains, i.e. based on the types of architecture that can be implemented by means of the apparatus PA.

More specifically, the control unit can select the following driving domains or types of architecture:
- hybrid serial architecture, in which the engine ICE is coupled to the member S1, which is separated from the member S2, and in which the motor-generators EM1, EM2 are both coupled to the respective members S1, S2;
- parallel hybrid architecture, in which the engine ICE is coupled to the member S1, which in turn is coupled to the member S2, and in which at least one between the motor-generators EM1, EM2 is coupled to the transmission line TM; and
- purely electrical architecture, in which the engine ICE is separated from the member S1 and in which at least one between the motor-generators EM1, EM2 is coupled to the transmission line TM.

While the serial architecture corresponds to just one serial configuration or mode, the parallel hybrid architecture and the purely electrical architecture include a plurality of possible configurations or modes, respectively parallel hybrid and purely electrical,.

More precisely, the possible modes within the relative domain are determined by the engaged configurations of both the clutch elements C3, C4 or by the engaged configuration of just one of them. Three different modes or configurations are thus possible according to the parallel hybrid architecture and the purely electrical architecture.

During the running of the vehicle, the control unit ECU selects (step 103 of Figure 4) a type of architecture by means of the control of the clutch elements C1, C2, C3, C4 based on the occurrence of conditions relating to the information extracted from the acquisition assembly, i.e. from the board DAB in particular.

The selected type of architecture is kept for the entire duration of a time interval in which the condition that determined the selection is held.

The conditions are distinct from one another, stored in the control unit ECU and predefined, in particular on a heuristic basis, for the purpose of maximizing the efficiency of the apparatus PA, as well as preferably of respecting the requests of the driver and ensuring a load factor on the apparatus PA that is as uniform as possible.

Alternatively, the conditions could be evaluated on the basis of various known optimization algorithms, potentially as a function of the information extracted from the acquisition assembly.

In this case, the conditions are established in terms of rules relating to the first information, indicative of the state of motion of the vehicle, and to the second information, indicative of the energy stored by the device BY.

More specifically, the rules relate to the speed of the vehicle and to the state of charge of the device BY.

For example, the condition leading to the selection of the hybrid serial architecture occurs when the first and the second quantity, i.e. the speed and the state of charge, are both lower than two respective thresholds, in particular a speed threshold and a minimum charge threshold.

In addition, the same condition also occurs when the speed exceeds the relative speed threshold and the state of charge is between the minimum charge threshold and a maximum charge threshold.

Moreover, still by way of example, the condition leading to the selection of a parallel hybrid architecture occurs when the speed exceeds the speed threshold and when the state of charge is below the minimum charge threshold.

According to a further example, the condition leading to the selection of a purely electrical architecture occurs when the speed and the state of charge respectively exceed the speed threshold and the maximum charge threshold.

In addition, this latter condition can also occur when the speed is below the speed threshold and the state of charge exceeds the minimum charge threshold.

The speed threshold and the minimum and maximum charge thresholds are stored in the control unit ECU; in particular, preferably, the speed threshold is between 10 km/h and 14 km/h, more preferably equal to 12 km/h. Preferably, the minimum and maximum charge thresholds are respectively in the interval 15%-25% and 70%-90%, more preferably equal to 20% and 70%.

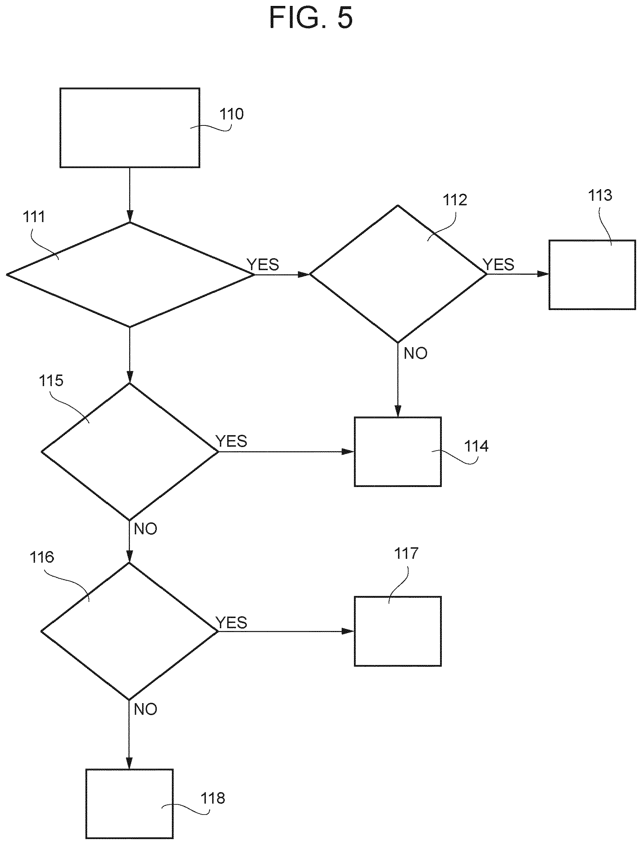

Figure 5 illustrates a logic process for selecting the type of architecture or driving domain.

At the start, block 110, the first and the second information associated with the first and the second quantity, respectively, are extracted. Then, block 111, the control unit ECU checks if the speed is below the relative speed threshold.

In the affirmative case of block 111 (output YES), the control unit ECU checks in block 112 if the state of charge is below the minimum charge threshold; in the affirmative case (output YES), the control unit ECU selects in block 113 the hybrid serial architecture. Otherwise (output NO), the control unit ECU selects in block 114 a purely electrical architecture.

In the negative case of block 111 (output NO), the control unit ECU checks in block 115 if the state of charge exceeds the maximum charge threshold; in the affirmative case (output YES), the control unit ECU selects in block 114 a purely electrical architecture. Otherwise (output NO), the control unit ECU checks in block 116 if the state of charge is below the minimum charge threshold.

In the affirmative case of block 116 (output YES), the control unit ECU selects in block 117 a parallel hybrid architecture. In the negative case of block 116 (output NO), it selects in block 118 the hybrid serial architecture.

Although Figure 5 shows all possible conditions in a single diagram, each condition is independent of the others and a modification of the same does not involve a modification of the others. Therefore, the conditions do not mutually imply one another and must be considered completely detached from one another.

Moreover, each condition could relate to different parameters with respect to those described in the above example. For example, one or more conditions could involve quantities indicative of the resistant torque of the user U or of the required power.

Once the type of architecture (step 103 of Figure 4) has been determined, the control unit ECU selects the effective operating configuration or driving mode.

To do this, the control unit ECU is further configured to determine (step 104 of Figure 4) reference values associated with a target speed of the vehicle and with a target torque to be delivered to the user U.

For example, the control unit ECU determines during the running of the vehicle the speed and the torque to be provided to the user U according to the requests of the driver.

More precisely, the control unit ECU can determine the required speed and torque in a known manner by means of the reception and processing of signals from the vehicle accelerator (not illustrated) and from torque transducers or sensors TR3 conveniently coupled to the member S2 and to the engine ICE.

At a given time instant, the speed and torque values determined in association with such instant define a relative pair of reference values.

The control unit ECU is further configured to determine (step 105 of Figure 4), as a function of the reference values, the operating configuration or driving mode which, between those selectable based on the type of selected architecture, has the maximum expected efficiency.

For example, the control unit ECU determines an expected efficiency for each of the selectable configurations or modes.

The determined efficiencies can affect the choice of the effective operating configuration or driving mode, in cases where the conditions for the selection of a parallel hybrid architecture or a purely electrical architecture occur.

On the other hand, the determination of the expected efficiency of the hybrid serial configuration is irrelevant, as the latter is the only selectable operating configuration or driving mode when the condition for the selection of the serial architecture occurs.

The determination of the efficiencies can occur by means of a theoretical calculation starting from an *a priori* knowledge of the efficiencies of the transmissions T1, T2, as well as of the transmission line TM, of the motor-generators EM1, EM2 and of the engine ICE, or can occur on an experimental basis.

Alternatively or additionally, the control unit ECU can store or calculate an efficiency map for each operating configuration or driving mode, wherein the efficiency map associates a plurality of pairs of values of the speed of the vehicle and torque to be delivered to the user U with respective efficiency values.

The efficiencies can be determined by interpolating the efficiency maps starting from the reference values determined in the preceding step 104.

Then, at least at the initial instant of the time interval in which the condition for the selection of a type of architecture occurs, the control unit ECU is configured to select (step 106 of Figure 4) the configuration or mode having the maximum expected efficiency.

In other words, at the initial instant when the condition for the selection of a parallel hybrid architecture occurs, the control unit ECU selects the configuration or mode with the highest expected efficiency.

In the same manner, at the initial instant when it is possible to select a purely electrical architecture, the control unit ECU selects the configuration or mode having the highest expected efficiency.

When the condition for the selection of the hybrid serial architecture occurs, the control unit ECU simply selects the only hybrid serial configuration or mode possible.

Preferably, in the instants following the initial instant, the control unit ECU keeps the current or already selected operating configuration if none of the other configurations among those selectable, according to the occurrence of conditions associated with the types of architecture, allows increasing the expected efficiency beyond a stored increase value.

For example, the increase value can be expressed in percentage with respect to the current efficiency; in particular, the increase value is lower than 0.35%, preferably between 0.25% and 0.05%.

This way, the control unit ECU avoids changing the operating configuration too frequently without a conspicuous advantage in terms of gained efficiency. This improves the stability and the reliability of the apparatus PA.

Conveniently, the selection of the operating configuration or driving mode (step 106 of Figure 4) can occur by means of a selection map that associates a plurality of pairs of values of speed of the vehicle and of torque to be delivered to the user U with a logic identifier that identifies the operating configuration that must be selected. For example, the logic identifier can be an integer.

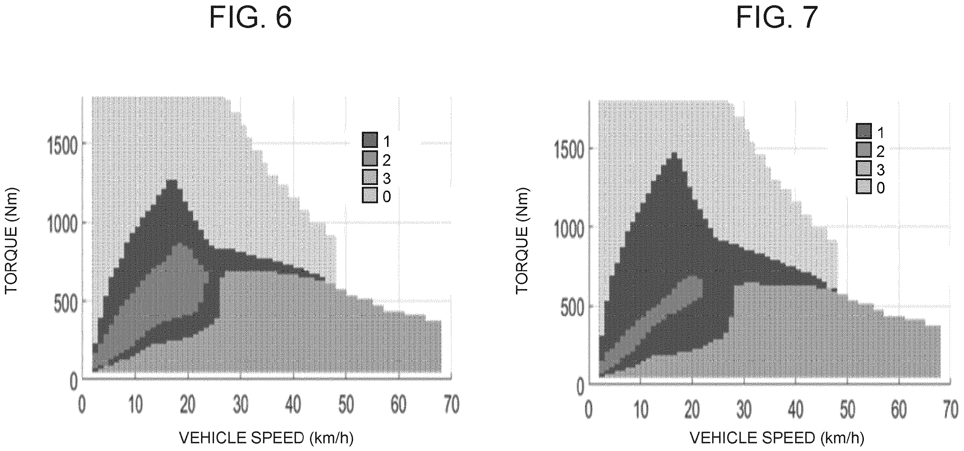

Examples of such maps are illustrated in Figures 6 and 7, wherein the increase value is respectively equal to 0.25% and 0.05%. The identifiers are displayed in different shades of grey.

For example, a first identifier, specifically equal to 1, indicates that the parallel hybrid or purely electrical configuration in which the motor-generator EM1 is coupled to the transmission line TM and the motor-generator EM2 is separated from the same is the configuration to be selected since it has the maximum expected efficiency, such that the increase in efficiency is equal to or greater than the stored value.

Analogously, a second identifier, specifically equal to 2, refers to the parallel hybrid or purely electrical configuration in which the motor-generator EM1 is separated from the transmission line TM and the motor-generator EM2 is coupled to the same.

Further, a third identifier, specifically equal to 3, refers to the parallel hybrid or purely electrical configuration in which both motor-generators EM1, EM2 are coupled to the transmission line TM.

Finally, a fourth identifier, specifically equal to 0, refers to a situation in which it suits to keep the current or already selected configuration as it is not possible to obtain an increase in efficiency greater than the stored value.

In the case of a stored increase value equal to zero, i.e. in a case in which the selection occurs based on a mere maximization criterion of the efficiency, the selection map is devoid of the fourth identifier. This occurs, for example, at the initial instant of an interval in which the type of architecture is changed.

The selection can thus occur by interpolating the selection map starting from the reference values determined in the preceding step 104.

The selection map can be stored in the control unit ECU or in an external memory, or calculated by the control unit ECU, for example based on the efficiency maps for each operating configuration or on an experimental basis.

In fact, from the efficiency maps it is possible to establish the operating configuration having the maximum efficiency for each pair of values of speed and torque.

A control method for controlling the apparatus PA comprises the execution of steps 101 to 103 and preferably steps 104, 105 and 106. Moreover, more preferably, the method comprises the step of keeping the already selected or current configuration if it is not possible to obtain an increase in efficiency greater than the stored increase value.

It follows from the foregoing that the selection of the operating configuration downstream of the selection of the type of architecture concerns the control of the clutch elements C2 and C3 only.

For this reason, a further method according to the invention comprises the control of a further propulsion apparatus (not illustrated) having the engine ICE, the motor-generators EM1, EM2, a transmission line coupled to the engine ICE so as to transmit power from the engine ICE to a user and comprising the members S1 and S2, the transmissions T1, T2, and the device BY.

The further propulsion apparatus is similar to the apparatus PA but preferably differs from the latter in that it does not provide for the possibility of selecting a type of architecture or driving domain.

The type of architecture is predefined and can be a parallel hybrid architecture or a purely electrical architecture.

The further method comprises the step of controlling the clutch elements C3, C4 during the running of the vehicle so as to select a configuration between a plurality of operating configurations, in which at least one between the motor-generators EM1, EM2 is coupled to the transmission line.

Moreover, the further method comprises determining a pair of reference values associated with a target vehicle speed and a target torque to be delivered to the user.

Moreover, the further method comprises determining, as a function of the reference values, a configuration that has the maximum expected efficiency.

The selected configuration is the one having the maximum expected efficiency.

Preferably, the further method comprises the step of keeping the current operating configuration if none of the other selectable configurations allow increasing the expected efficiency beyond a stored increase value.

Based on the foregoing, the advantages of the apparatus PA and of the methods according to the invention are evident.

The structure of the apparatus PA allows optimizing its efficiency as a function of the operating parameters of the vehicle during the running by means of the variation of the type of architecture or driving domain.

Similarly, the efficiency is further optimized by the further selection of the best operating configuration between those provided according to the selected architecture.

The possibility of keeping the current configuration if the change is not justified by a significant increase in efficiency renders the apparatus PA stable and reliable in use.

Finally, it is clear that modifications and variants can be made to the apparatus PA and to the methods according to the present invention, which modifications and variants however do not depart from the scope of protection defined by the claims.

In particular, the number and the type of members of the transmission line TM or of the transmissions T1, T2 could be different from that described by way of example.

## Claims

1. A propulsion apparatus (PA) for a vehicle, the apparatus comprising
- an internal combustion engine (ICE);
- a first and a second electric motor-generator (EM1, EM2);
- a transmission line (TM) coupled to the engine (ICE) to transmit power from the engine (ICE) to a user element (U) and comprising
a) a first and a second member (S1, S2);
b) a first clutch element (C1) for selectively coupling or separating the engine (ICE) with respect to the first member (S1); and
c) a second clutch element (C2) for selectively coupling or separating the first member (S1) with respect to the second member (S2);
- a first transmission (T1) for coupling the first motor-generator (EM1) to the first member (S1) and comprising a third clutch element (C3) for selectively coupling or separating the first motor-generator (EM1) with respect to the first member (S1);
- a second transmission (T2) for coupling the second motor-generator (EM2) to the second member (S2) and comprising a fourth clutch element (C4) for selectively coupling or separating the second motor-generator (EM2) with respect to the second member (S2);
- electrical energy storage means (BY) electrically connected to the first and the second motor-generator (EM1, EM2) and adapted to store generated energy, as well as to supply the stored energy;
said first and second transmission (T1, T2) respectively defining a first and a second transmission ratio (r1, r2) at least when the first and the second motor-generator (EM1, EM2) are respectively coupled to the transmission line (TM).

2. The propulsion apparatus (PA) of claim 1, further comprising
- acquisition means (TR1, TR2) to acquire measurements of at least a first quantity indicative of the energy stored by the electrical energy storage means (BY) or indicative of a motion state of the vehicle; and
- a control unit (ECU) connected to the acquisition means (TR1, TR2) to extract information relating to the acquired measurements;
the control unit (ECU) being further configured to control said first, second, third and fourth clutch elements (C1, C2, C3, C4) during the running of the vehicle based on the information extracted, so as to select one of a plurality of operating configurations, which include:
- a hybrid serial configuration, in which the engine (ICE) is coupled to the first member (S1), the first member (S1) is separated from the second member (S2), and the first and the second motor-generator (EM1, EM2) are respectively coupled to the first and the second member (S1, S2);
- a plurality of parallel hybrid configurations, in which the engine (ICE) is coupled to the first member (S1), the first member (S1) is coupled to the second member (S2), and at least one between the first and the second motor-generator (EM1, EM2) is coupled to the transmission line (TM); and
- a plurality of purely electrical configurations, in which the engine (ICE) is separated from the first member (S1) and at least one between the first and the second motor-generator (EM1, EM2) is coupled to the transmission line (TM) .

3. The propulsion apparatus of claim 2, wherein the control unit (ECU) is configured to control said first, second, third and fourth clutch elements (C1, C2, C3, C4) during the running of the vehicle in such a manner to:
- select the hybrid serial configuration during a first time interval in which said information indicates the occurrence of a first condition;
- select a first configuration from the parallel hybrid configurations at least at the initial instant of a second time interval in which said information indicates the occurrence of a second condition distinct from the first condition; and
- select a second configuration from the purely electrical configurations at least at the initial instant of a third time interval in which the said information indicates the occurrence of a third condition distinct from the first and the second condition.

4. The propulsion apparatus of claim 2 or 3, wherein the acquisition means comprise a transducer (TR2) to detect a second quantity indicative of the energy stored by the electrical energy storage means (BY),
wherein said information comprises first information relating to the measurements of the first quantity and second information relating to the measurements of the second quantity;
said first quantity being indicative of the motion state of the vehicle.

5. The propulsion apparatus of claim 4, when dependent on claim 3, wherein the first quantity is indicative of the actual speed of the vehicle;
the control unit (ECU) comprising memory means in which a speed threshold is stored, as well as a first threshold and a second threshold greater than the first threshold, said first and second threshold being related to the energy stored by the electrical energy storage means (BY);
and wherein:
- the first condition occurs when the first and the second information indicate that
a) the first and the second quantity are respectively lower than the speed threshold and the first threshold; or
b) the first quantity exceeds the speed threshold and the second quantity is between the first and the second threshold;
- the second condition occurs when the first and the second information indicate that the first quantity exceeds the speed threshold and that the second quantity is lower than the first threshold; and
- the third condition occurs when the first and the second information indicate that
a) the first quantity exceeds the speed threshold and the second quantity exceeds the second threshold; or
b) the first quantity is lower than the speed threshold and the second quantity exceeds the first threshold.

6. The propulsion apparatus of any of claims 3 to 5, wherein the control unit (ECU) is further configured to
- determine a pair of reference values associated with a target vehicle speed and a target torque to be delivered to the user (U); and
- determine, as a function of the reference values, a third configuration which, between the parallel hybrid configurations or between the purely electrical configurations, has a maximum expected efficiency;
wherein the control unit is configured such that the selected first configuration or second configuration is the third configuration.

7. The propulsion apparatus of any of claims 3 to 6, wherein the control unit (ECU), within said second or third time interval, is configured to
- keep the operating configuration already selected if none of the other selectable operating configurations allows the increasing of the expected efficiency beyond a stored increase value.

8. The propulsion apparatus of any of the foregoing claims, wherein the first and the second motor-generator (EM1, EM2) have respective equal power bands and equal motor-generator efficiencies.

9. A method for controlling an apparatus according to claim 1, the method comprising the steps of
- acquiring (101) measurements of at least a first quantity indicative of the energy stored by the electric energy storage means (BY) or indicative of a motion state of the vehicle;
- extracting (102) information relating to the acquired data; and
- controlling (103, 106) said first, second, third and fourth clutch elements (C1, C2, C3, C4) during the running of the vehicle based on the information extracted, so as to select one of a plurality of operating configurations, which include:
a) a hybrid serial configuration, in which the engine (ICE) is coupled to the first member (S1), the first member (S1) is separated from the second member (S2), and the first and the second motor-generator (EM1, EM2) are respectively coupled to the first and the second member (S1, S2);
b) a plurality of parallel hybrid configurations, in which the engine (ICE) is coupled to the first member (S1), the first member (S1) is coupled to the second member (S2), and at least one between the first and the second motor-generator (EM1, EM2) is coupled to the transmission line (TM); and
c) a plurality of purely electrical configurations, in which the engine (ICE) is separated from the first member (S1) and at least one between the first and the second motor-generator (EM1, EM2) is coupled to the transmission line (TM).

10. The method of claim 9, wherein the step of controlling said first, second, third, and fourth clutch element (C1, C2, C3, C4) comprises, in turn
- selecting (113, 118) the hybrid serial configuration during a first time interval in which said information indicates the occurrence of a first condition;
- selecting (117) a first configuration from the parallel hybrid configurations at least at the initial instant of a second time interval in which said information indicates the occurrence of a second condition distinct from the first condition; and
- selecting (114) a second configuration from the purely electrical configurations at least at the initial instant of a third time interval in which the said information indicates the occurrence of a third condition distinct from the first and the second condition.

11. The method of claim 9 or 10, wherein the step of acquiring (101) also comprises acquiring measurements of a second quantity indicative of the energy stored by the electrical energy storage means (BY),
wherein said information comprises first information relating to the measurements of the first quantity and second information relating to the measurements of the second quantity;
said first quantity being indicative of the motion state of the vehicle.

12. The method of claim 11, when dependent on claim 10, wherein the first quantity is indicative of the actual speed of the vehicle, and wherein:
- the first condition occurs when the first and the second information indicate that
a) the first and the second quantity are respectively lower than a speed threshold and a first threshold; or
b) the first quantity exceeds the speed threshold and the second quantity is between the first and a second threshold;
- the second condition occurs when the first and the second information indicate that the first quantity exceeds the speed threshold and that the second quantity is lower than the first threshold; and
- the third condition occurs when the first and the second information indicate that
a) the first quantity exceeds the speed threshold and the second quantity exceeds the second threshold; or
b) the first quantity is lower than the speed threshold and the second quantity exceeds the first threshold.

13. The method of any of claims 10 to 12, further comprising the steps of
- determining (104) a pair of reference values associated with a target vehicle speed and a target torque to be delivered to the user (U); and
- determining (105), as a function of the reference values, a third configuration which, between the parallel hybrid configurations or between the purely electrical configurations, has a maximum expected efficiency; wherein the selected first configuration or second configuration is the third configuration.

14. The method of claim 10, further comprising, within said second or third time interval, the step of
- keeping the operating configuration already selected if none of the other selectable operating configurations allows the increasing of the expected efficiency beyond an increase value.

15. A method for controlling a propulsion apparatus for a vehicle, the apparatus comprising
- an internal combustion engine (ICE);
- a first and a second electric motor-generator (EM1, EM2);
- a transmission line (TM) coupled to the engine (ICE) to transmit power from the engine (ICE) to a user element (U) and comprising a first and a second member (S1, S2);
- a first transmission (T1) for coupling the first motor-generator (EM1) to the first member (S1) and comprising a third clutch element (C3) for selectively coupling or separating the first motor-generator (EM1) with respect to the first member (S1);
- a second transmission (T2) for coupling the second motor-generator (EM2) to the second member (S2) and comprising a fourth clutch element (C4) for selectively coupling or separating the second motor-generator (EM2) with respect to the second member (S2);
- electrical energy storage means (BY) electrically connected to the first and the second motor-generator (EM1, EM2) and adapted to store generated energy, as well as to supply the stored energy;
the method comprising the steps of
- controlling the third and the fourth clutch element (C3, C4) during the running of the vehicle so as to select one of a plurality of operating configurations, in which at least one of the first and the second motor-generator (EM1, EM2) is coupled to the transmission line (TM);
- determining a pair of reference values associated with a target vehicle speed and a target torque to be delivered to the user (U); and
- determining, as a function of the reference values, an optimal configuration which, between the operating configurations, has a maximum expected efficiency;
wherein the selected configuration is the optimal configuration.

16. The method of claim 15, further comprising the step of keeping the operating configuration already selected if none of the other selectable operating configurations allows the increasing of the expected efficiency beyond an increase value.
